# EUROPÄISCHE PATENTSCHRIFT

(11) **EP 2 526 143 B1**
(45) Veröffentlichungstag und Bekanntmachung des Hinweises auf die Patenterteilung: **06.08.2014**
(21) Anmeldenummer: 12710283.8
(22) Anmeldetag: 26.03.2012
(51) Int. Cl.: C08J 9/00, C08J 9/20, C08F 12/08

(54) **VERFAHREN ZUR HERSTELLUNG VON EXPANDIERBAREN STYROLPOLYMERISATPARTIKELN MIT VERRINGERTER WÄRMELEITFÄHIGKEIT**
METHOD FOR PRODUCING EXPANDABLE STYRENE POLYMER PARTICLES HAVING REDUCED THERMAL CONDUCTIVITY
PROCÉDÉ DE PRÉPARATION DE PARTICULES DE POLYMÉRISAT DE STYRÈNE EXPANSIBLES PRÉSENTANT UNE CONDUCTIVITÉ THERMIQUE RÉDUITE

(30) Priorität: 29.03.2011 EP 11160112
(43) Veröffentlichungstag der Anmeldung: 28.11.2012
(73) Patentinhaber: BASF SE, 67056 Ludwigshafen (DE)
(72) Erfinder: KUBIETZ, Norbert, 67373 Dudenhofen (DE); BERNHARD, Thomas, 74933 Neidenstein (DE)
(86) Internationale Anmeldenummer: PCT/EP2012/055271
(87) Internationale Veröffentlichungsnummer: WO 2012/130778

(56) Entgegenhaltungen:
- GB-A- 997 356
- US-A- 2 824 846

## Beschreibung

Die Erfindung betrifft Verfahren zur Herstellung von expandierbaren Styrolpolymerisatpartikeln mit verbesserter Wärmeleitfähigkeit durch Polymerisation von Styrol in wässriger Suspension in Gegenwart von Keimbildner und flüchtigem Treibmittel.

Polystyrolpartikelschaumstoffe sind seit langer Zeit bekannt und haben sich auf vielen Gebieten bewährt. Die Herstellung derartiger Schaumstoffe erfolgt durch Aufschäumen von mit Treibmitteln imprägnierten Polystyrolpartikeln und anschließendes Verschweißen der so erhaltenen Schaumpartikel zu Formkörpern. Ein wesentliches Einsatzgebiet ist die Wärmedämmung im Bauwesen.

Die zur Wärmedämmung eingesetzten Schaumstoffplatten aus Polystyrolpartikelschaum haben zumeist Dichten von etwa 30 g/l, da bei diesen Dichten die Wärmeleitfähigkeit des Polystyrolpartikelschaums ein Minimum aufweist. Aus Gründen der Materialeinsparung wäre es wünschenswert, Schaumstoffplatten mit geringeren Dichten, insbesondere < 25 g/l, zur Wärmeisolation einzusetzen. Derartige Schaumstoffplatten mit geringerer Dichte weisen jedoch eine drastisch verschlechterte Wärmedämmfähigkeit auf.

Zur Verringerung der Wärmeleitfähigkeit von Polystyrolschaumstoffen wurden diesen auf verschiedene Art und Weise athermane Materialien wie Ruß (EP-A 372 343, EP-A 620 246), Graphit (EP-A 981 574 und EP-A 981 575) oder Aluminiumblättchen (WO 00/043442) zugegeben. Hierbei werden je nach Art und Einarbeitung hohe Mengen der athermanen Materialien benötigt, die aufgrund der nukleierenden Wirkung zu Problemen bei der homogenen Einarbeitung führen können. Des Weiteren können die mechanischen Eigenschaften der daraus hergestellten Schaumstoffe und deren Brandverhalten negativ beeinflusst werden. Die dunkle Färbung der Schaumstoffe kann bei starker Sonneneinstrahlung zudem zu Formänderungen der Schaumstoffplatten führen.

In der GB-A 997 356 und EP-A 612 792 werden Polyethylenwachse als Keimbildner für expandierbare Styrolpolymerisate beschrieben. Bei guter Expandierbarkeit können diese zu homogenen, feinzelligen Schaumstoffen verarbeitet werden.

GB 1,581,237 beschreibt unter anderem die Verwendung von Rizinuswachs (hydriertes Rizinusöl, HCO) als Beschichtungsmittel für expandierbares Polystyrol, um die Entformbarkeit und die Qualität der Schaumstoffformteile nach dem Versintern der vorgeschäumten EPS-Partikel zu verbessern.

Die WO 2009/019310 beschreibt die Verwendung von Rizinuswachs enthaltenen Beschichtungsmittel für expandierbare Styrolpolymerisate, die beim Vorschäumen eine geringe Neigung zum Verkleben zeigen und eine schnelle Verarbeitung der vorgeschäumten Partikel bei geringer statischer Aufladung zu Schaumstoffformteilen mit guten mechanischen Eigenschaften ermöglichen.

Aufgabe der vorliegenden Erfindung war es daher den genannten Nachteilen abzuhelfen und ein Verfahren zur Herstellung von expandierbaren Styrolpolymerisaten zu finden, die auch ohne Zusatz von athermanen Partikeln zu Schaumstoffen mit homogener Zellstruktur und niedrigen Wärmeleitfähigkeiten bei niedrigen Dichten verarbeitet werden können. Desweiteren sollte die Entformzeit bei der Herstellung von Partikelschaumstoffformteilen verkürzt werden.

Demgemäß wurde ein Verfahren zur Herstellung von expandierbaren Styrolpolymerisatpartikeln durch Polymerisation von vinylaromatischen Monomeren in wässriger Suspension in Gegenwart von Keimbildner und flüchtigem Treibmittel gefunden, wobei als Keimbildner 10 bis 5000 ppm, bezogen auf vinylaromatisches Monomere, eines Triglycerides einer Hydroxy-C16 bis C18-Ölsäure verwendet wird.

Bevorzugt wird die Polymerisation in Gegenwart von 100 bis 2000 ppm, bezogen auf vinylaromatische Monomere, eines Triglycerides einer Hydroxy-C16 bis C18-Ölsäure durchgeführt.

Bei Triglyceriden von Hydroxy-C₁₆ bis C₁₈-Ölsäuren handelt es sich um Naturprodukte, die üblicherweise in untergeordneten Mengen Verunreinigungen enthalten und insbesondere noch Mono-, Di- und Triglyceride anderer Säuren enthalten können.

Bevorzugt weisen die Triglyceride einer Hydroxy-C₁₆ bis C₁₈-Ölsäure einem Schmelzpunkt im Bereich von 70 bis 95°C auf.

Als Triglycerid einer Hydroxy-C16 bis C₁₈-Ölsäure werden bevorzugt Triglyceride von Monohydroxy-C₁₆ bis C₁₈-Alkansäuren, insbesondere hydriertes Rizinusöl (HCO, Rizinuswachs) eingesetzt.

Styrolpolymerisate im Sinne der Erfindung sind Polystyrol und Mischpolymerisate des Styrols mit anderen α,β-olefinisch ungesättigten Verbindungen, die mindestens 50 Gewichtsteile Styrol einpolymerisiert enthalten.

Im erfindungsgemäßen Verfahren wird bevorzugt Styrol als vinylaromatischen Monomer eingesetzt. Als Comonomere kommen z.B. in Frage: α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylverbindungen, wie Vinylcarbazol oder auch geringe Mengen an Verbindungen, die zwei polymerisierbare Doppelbindungen enthalten, wie Butadien, Divinylbenzol oder Butandioldiacrylat.

Expandierbare Styrolpolymerisat-Partikel sind solche, die durch z. B. mit Heißluft oder Wasserdampf zu expandierten, Styrolpolymerisat-Partikeln verschäumbar sind. Sie enthalten in der Regel chemische oder physikalische Treibmittel.

Als physikalische Treibmittel geeignet sind Gase, wie Stickstoff oder Kohlendioxid oder aliphatische Kohlenwasserstoffe, Alkohole, Ketone, Ether oder halogenierte Kohlenwasserstoffe. Als flüchtige Treibmittel werden bevorzugt C₃- bis C₇- Kohlenwasserstoffe, wie Propan, Butan, Isobutan, n-Pentan, i-Pentan, Neopentan, Hexan oder Mischungen davon eingesetzt. In der Regel werden sie in Mengen von 2 bis 10 Gew.-%, bevorzugt 3 bis 7 Gew.-%, bezogen auf die vinylaromatischen Monomeren, eingesetzt.

Die Polymerisation wird durch übliche styrollösliche Katalysatoren ausgelöst, beispielsweise Dibenzoylperoxid, tert.- Butylperbenzoat, Dicumylperoxid, Di-tert.-butylperoxid und deren Mischungen, vorzugsweise in Mengen von 0,05 bis 1 Gew.%, bezogen auf die Monomeren.

Die Suspensionspolymerisation von vinylaromatischen Monomeren wie Styrol ist an sich bekannt. Sie ist ausführlich beschrieben im Kunststoff-Handbuch, Band V, "Polystyrol", Carl Hanser-Verlag, 1969, Seiten 679 bis 688. Dabei wird im allgemeinen Styrol, ggf. zusammen mit den oben genannten Comonomeren, in Wasser suspendiert und in Gegenwart von organischen oder anorganischen Suspensionsstabilisatoren auspolymerisiert.

Im erfindungsgemäßen Verfahren werden perlförmige expandierbare Styrolpolymerisate hergestellt durch Polymerisation von Styrol, ggf. zusammen mit bis zu 50 Gew.-% der obengenannten Comonomeren, in wässriger Suspension, wobei vor, während oder nach der Polymerisation die oben beschriebenen Treibmittel und gegebenenfalls übliche Zusatzstoffe in wirksamen Mengen zugesetzt werden.

Man kann die Polymerisation auch in Gegenwart eines üblichen Kettenüberträgers ausführen, der das Molekulargewicht regelt. Vorzugsweise wird tert.-Dodecylmercaptan oder DMS (dimeres α-Methylstyrol) verwendet. Der Regler wird im Allgemeinen in einer Menge von 0,0001 bis 0,5 Gew.-%, bezogen auf Monomere, verwendet.

Die wässrige Phase enthält zur Stabilisation der wässrigen Suspension neben Wasser bevorzugt Magnesiumpyrophosphat, Tricalciumphosphat und/oder Magnesiumsulfat.

Die organische Phase enthält die vinylaromatischen Monomeren, wie Styrol und organische Peroxide. Das Volumenverhältnis der organischen Phase zur wässrigen Phase beträgt in der Regel 2:1 bis 1:2, insbesondere 3:2 bis 1:1.

Für das erfindungsgemäße Verfahren wird bevorzugt eine Mischung aus Magnesiumpyrophosphat, einem sekundären Alkali- oder Erdalkali-Alkylsulfonat und gegebenenfalls einem eine Doppelbindung tragenden Carboxylat als Suspensionsstabilisatorsystem verwendet. Das Carboxylat verbessert das Stabilisierungsvermögen und verhindert Belagbildung an den Kesselwänden. Darüber hinaus werden auch die Produkteigenschaften, wie Expandiervermögen und elektrostatische Aufladbarkeit, günstig beeinflusst.

Magnesiumpyrophosphat wird im Allgemeinen in einer Konzentration zwischen 0,03 und 2,0, vorzugsweise zwischen 0,05 und 0,5 und besonders bevorzugt zwischen 0,1 und 0,2 Gew.-%, bezogen auf die wässrige Phase, eingesetzt.

Das Magnesiumpyrophosphat wird vorzugsweise unmittelbar vor der Polymerisation durch Vereinigung möglichst konzentrierter Lösungen von Pyrophosphat und Magnesiumionen hergestellt, wobei die zur Fällung von Mg₂P₂O₇ stöchiometrisch erforderliche Menge eines Magnesiumsalzes eingesetzt wird. Das Magnesiumsalz kann in fester Form oder in wässriger Lösung vorliegen. In einer bevorzugten Ausführungsform wird das Magnesiumpyrophosphat durch Vereinigung wässriger Lösungen von Natriumpyrophosphat (Na₄P₂O₇) und Magnesiumsulfat (MgSO₄ 7 H₂O) hergestellt. Das Magnesiumsalz wird in mindestens der stöchiometrisch erforderlichen Menge, vorzugsweise in stöchiometrischer Menge, zugegeben. Für das erfindungsgemäße Verfahren ist günstig, wenn kein Überschuss an Alkalipyrophosphat vorliegt.

Im erfindungsgemäßen Verfahren werden bevorzugt Sulfonatgruppen enthaltende Emulgatoren, sogenannte Extender eingesetzt. Zu diesen Extendem gehören beispielsweise Natriumdodecylbenzolsulfonat, langkettige Alkylsulfonate, Vinylsulfonat, Diisobutylnaphthalinsulfonat. Als Extender werden bevorzugt Alkalisalze der Dodecylbenzolsulfonsäure und/oder Alkalisalze eines Gemisches von C₁₂-C₁₇-Alkylsulfonsäuren eingesetzt. Ein besonders geeignetes Gemisch von C₁₂-C₁₇-Alkylsulfonaten besteht aus überwiegend sekundären Natriumalkylsulfonaten mit der mittleren Kettenlänge C₁₅. Ein derartiges Gemisch wird unter der Bezeichnung Mersolat® K 30 von der Firma Bayer AG vertrieben. Die Extender erhöhen die Fähigkeit der schwerlöslichen anorganischen Verbindungen, die Suspension zu stabilisieren.

Die Extender werden in der Regel in Mengen zwischen 0,5 und 15, vorzugsweise 2 bis 10 Gew.-%, bezogen auf Magnesiumpyrophosphat, eingesetzt.

Bevorzugt wird das Tricglycerid einer Hydroxy-C16 bis C18-Ölsäure in der organischen Phase, d.h. in Styrol gelöst zugegeben und der wässrigen Phase vor Beginn der Polymerisation zugegeben.

Es hat sich gezeigt, dass es für die Stabilität der Suspension günstig ist, wenn bei Beginn der Suspensionspolymerisation eine Lösung von Polystyrol (bzw. einem entsprechenden Styrolcopolymerisat) in Styrol (bzw. der Mischung von Styrol mit Comonomeren) vorliegt. Bevorzugt geht man dabei von einer 0,5 bis 30, insbesondere 3 bis 20 gew.-%igen Lösung von Polystyrol in Styrol aus. Man kann dabei frisches Polystyrol in Monomeren auflösen, zweckmäßigerweise setzt man aber sogenannte Randfraktionen ein, die bei der Auftrennung des bei der Herstellung von expandierbarem Polystyrol anfallenden Perlspektrums als zu große oder zu kleine Perlen ausgesiebt werden.

In dem erfindungsgemäßen Verfahren können neben dem als Keimbildner eingesetzten Triglycerid einer Hydroxy-C16 bis C18-Ölsäure zusätzlich auch übliche Zusatzstoffe, die den expandierbaren Produkten bestimmte Eigenschaften verleihen, zugesetzt werden. Genannt seien beispielsweise Flammschutzmittel auf Basis von organischen Brom- oder Chlorverbindungen, wie Trisdibrompropylphosphat, Hexabromcyclododecan, Tetrabrombisphenol-A-Derivate, bromierte Diphenylethane, Chlorparaffin, sowie Synergisten für Flammschutzmittel, wie Dicumyl und hochzersetzliche organische Peroxide; ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure, sowie Mittel zur Verkürzung der Entformzeit beim Ausschäumen, wie z.B. Glycerinester oder Hydroxycarbonsäureester.

Geeignete Zusatzstoffe zur Erniedrigung der Wärmeleitfähigkeit sind Kohlenstoffpartikel, wie Ruß und Graphit. Geeignet sind alle üblichen Rußsorten, wobei Flammruß mit einer Partikelgröße von 80 bis 120 nm bevorzugt ist. Ruß wird vorzugsweise in Mengen von 2 bis 10 Gew.% eingesetzt. Besonders gut geeignet ist aber Graphit, wobei eine mittlere Partikelgröße von 0,5 bis 200 µm, vorzugsweise von 1 bis 25 µm, und insbesondere von 2 bis 20 µm, ein Schüttgewicht von 100 bis 500 g/l und eine spezifische Oberfläche von 5 bis 20 m²/g bevorzugt sind. Es kann Naturgraphit oder gemahlener synthetischer Graphit eingesetzt werden. Die Graphitpartikel sind im Styrolpolymerisat in Mengen von 0,1 bis 25 Gew.%, insbesondere von 0,5 bis 8 Gew.-% enthalten.

Entsprechend der beabsichtigten Wirkung in den expandierbaren Styrolpolymerisatpartikeln werden die Zusatzstoffe zur homogenen Verteilung vor oder während der Polymerisation zugegeben oder anschließend auf die erfindungsgemäß hergestellten expandierbaren Styrolpolymerisate aufgebracht.

Die nach dem erfindungsgemäßen Verfahren hergestellten treibmittelhaltigen Styrolpolymerisatpartikel haben im Allgemeinen einen Durchmesser zwischen 0,2 und 4 mm. Sie können nach üblichen Methoden, z.B. mit Wasserdampf, zu Schaumstoffteilchen mit einem Durchmesser zwischen 0,1 und 2 cm und einer Schüttdichte zwischen 5 und 100 kg/m³ vorgeschäumt werden.

Die vorgeschäumten Teilchen können dann nach üblichen Verfahren zu Schaum-Formteilen mit einer Dichte von 5 bis 100 kg/m³ ausgeschäumt werden.

Gegenstand der Erfindung ist auch die Verwendung von Tricglyceriden einer Hydroxy-C16 bis C18-Ölsäure als Keimbildner in expandierbaren Styrolpolymerisatpartikeln. Der Keimbildner regelt die Zellzahl beim Vorschäumen der expandierbaren Styrolpolymerisatpartikel.

Die expandierbaren Styrolpolymerisat-Partikel können je nach Herstellverfahren kugel- bzw. perlförmig oder zylinderförmig sein und weisen in der Regel einen mittleren Teilchendurchmesser im Bereich von 0,05 bis 5 mm, insbesondere 0,3 bis 2,5 mm auf, die gegebenenfalls durch Siebung in einzelne Fraktionen aufgeteilt werden können.

Die expandierten Styrolpolymerisat-Partikel haben entsprechend dem Expansionsgrad mittlere Teilchendurchmesser im Bereich von 1 bis 10 mm, insbesondere 2 bis 6 mm und eine Dichte im Bereich von 10 bis 200 kg/m³.

Die expandierbaren Styrolpolymerisat-Partikel können beispielsweise durch Druckimprägnierung von thermoplastischen Polymer-Partikeln mit Treibmitteln in einem Kessel, durch Suspensionspolymerisation in Gegenwart von Treibmitteln oder durch Schmelzeimprägnierung in einem Extruder oder statischen Mischer und anschließende Druckunterwassergranulierung erhalten werden.

Expandierte Styrolpolymerisatpartikel können durch Verschäumen von expandierbaren Styrolpolymerisat-Partikeln, z B. mit Heißluft oder Wasserdampf in Druckvorschäumern, durch Druckimprägnierung von Styrolpolymerisat-Partikeln mit Treibmitteln in einem Kessel und anschließendem Entspannen oder durch Schmelzeextrusion einer treibmittelhaltigen Schmelze unter Aufschäumen und anschließender Granulierung erhalten werden. Die Schüttdichten bei einmaligem Vorschäumen liegen in der Regel im Bereich von 10 bis 20 kg/m³, vorzugsweise im Bereich von 15 bis 18 kg/m³.

Die expandierbaren oder expandierten Styrolpolymerisat-Partikel können vor oder nach dem Verschäumen, beispielsweise durch Auftrommeln der erfindungsgemäßen Beschichtungszusammensetzung, in einem Schaufelmischer (Fa. Lödige) oder durch in Kontaktbringen der Oberfläche der Styrolpolymerisatpartikel mit einer Lösung, beispielsweise durch Tauchen oder Sprühen, beschichtet werden. Bei der Herstellung durch Extrusion einer treibmittelhaltigen Schmelze kann die Beschichtungsmittelzusammensetzung auch dem Wasserkreislauf des Unterwassergranulators in Form einer wässrigen Lösung oder wässrigen Suspension zugegeben werden.

Das erfindungsgemäße Verfahren weist zahlreiche Vorteile auf. Durch die Verwendung von Tricglyceriden einer Hydroxy-C16 bis C18-Ölsäure als Keimbildner in expandierbaren Styrolpolymerisatpartikeln kann die Zellzahl und Zellstruktur beim Vorschäumen der expandierbaren Styrolpolymerisatpartikel so geregelt werden, dass diese auch ohne Zusatz von athermanen Partikeln zu Schaumstoffen mit homogener Zellstruktur und niedrigen Wärmeleitfähigkeiten bei niedrigen Dichten verarbeitet werden können. Desweiteren kann die Entformzeit bei der Herstellung von Partikelschaumstoffformteilen verkürzt werden.

### Beispiele:

### Beispiele 1 bis 4:

### Eingesetzte Rohstoffe:

Hydriertes Rizinusöl (HCO, Smp. = 87°C, (Castor Wax NF, Firma CasChem)) wurde zusammen mit Hilfe von Trockeneis zu Pulver vermahlen.

### Polyethylenwachs (Polywachs Miniprills der Fa. Baker Petrolite)

### Herstellung einer Mg₂P₂O₇-Suspension:

Zur Herstellung einer Mg₂P₂O₇-Suspension wurden für jedes der folgenden Beispiele vorab jeweils 1,20 kg Na₄P₂O₇ in 50 kg Wasser bei Raumtemperatur gelöst. Unter Rühren wurde zu dieser Lösung eine Lösung aus 2,22 kg MgSO₄ x 7 H₂O in 8,00 kg Wasser gegeben und anschließend für 5 Minuten gerührt. Es entstand eine wässrige Suspension von Magnesiumpyrophosphat (MPP).

### Beispiel 1:

In einem druckfesten Rührkessel aus korrosionsfestem Edelstahl wurden 430 kg Wasser und 49 kg der Mg₂P₂O₇-Suspension vorgelegt. Hierzu wurden 560 kg Styrol zusammen mit 2,8 kg Dicumylperoxid und 0,67 kg einer 75 Gew.-%igen Dibenzoylperoxidlösung , 0,083 kg einer 2-%igen Lösung von Armostat^{®} 400 und 0,56 kg hydriertes Rizinusöl (bez. organische Phase) zudosiert.

Der Rührkessel wurde verschlossen, ein Stickstoffdruck von 1 bar eingestellt und in innerhalb von 104 Minuten von 20 auf 95°C erhitzt. Danach wurde die Mischung in 285 Minuten auf 136 °C erhitzt. Anschließend rührte man die Mischung noch für weitere 40 Minuten 135 °C.

39 min nach Erreichen einer Temperatur von 80 °C wurden 4,2 kg einer wässrigen Natriumcarbonat oder Natriumcarbonat/Natriumhydrogencarbonatlösung der Suspension zugesetzt. 104 min nach Erreichen der Temperatur von 80 °C wurden 1,85 kg einer 2 %igen wässrigen Lösung von Mersolat^{®} K30 zugefügt. 145 min nach Erreichen der Temperatur von 80 °C wurden 31,7 kg Pentan zugefügt. 220 min nach Erreichen der Temperatur von 80 °C wurden 5,25 kg einer wässrigen Bittersalzlösung zugegeben.

Die beschichteten EPS-Perlen wurden im Vorschäumer vorgeschäumt und in einer Form zu Blöcken mit einer Dichte von 19,5 g/l versintert.

Die Druckfestigkeit wurde bei 10 % Stauchung nach EN 826, die Biegefestigkeit nach EN12039 Methode B bestimmt.

Die Wärmeleitzahlen (WLF) wurden nach DIN 52612 (Poensgen-Methode) bei 10°C ermittelt.

### Vergleichsversuch V1:

Es wurde analog Beispiel 1 vorgegangen, wobei anstelle von hydriertem Rizinusöl Polyethylenwachs eingesetzt wurde.

**Tabelle 1: Eigenschaften der Schaumstoffe aus den Beispielen und Vergleichsversuchen**

| | Beispiel 1 | Vergleichsversuch V1 |
|---|---|---|
| Dichte | 19,8 | 19,5 |
| Zellzahl [Zellen/mm] | 5,2 ± 2,6 | 10,4 ± 2,4 |
| WLF [mW/m*K] | 34,9 | 35,7 |
| Entformzeit [sec.] | 10 | 37 |
| Biegearbeit [Nm] | 2,45 | 1,88 |

## Patentansprüche

1. Verfahren zur Herstellung von expandierbaren Styrolpolymerisatpartikeln durch Polymerisation von vinylaromatischen Monomeren in wässriger Suspension in Gegenwart von Keimbildner und flüchtigem Treibmittel, **dadurch gekennzeichnet, dass** als Keimbildner 10 bis 5000 ppm, bezogen auf vinylaromatische Monomere, eines Tricglycerides einer Hydroxy-C16 bis C₁₈-Ölsäure verwendet wird.

2. Verfahren nach Anspruch 1, **dadurch gekennzeichnet, dass** das Tricglycerid einer Hydroxy-C₁₆ bis C₁₈-Ölsäure einem Schmelzpunkt im Bereich von 70 bis 95°C aufweist.

3. Verfahren nach Anspruch 1 oder 2, **dadurch gekennzeichnet, dass** als Tricglycerid einer Hydroxy-C16 bis C₁₈-Ölsäure ein hydriertes Ricinusöl (HCO) eingesetzt wird.

4. Verfahren nach einem der Ansprüche 1 - 3, **dadurch gekennzeichnet, dass** das Tricglycerid einer Hydroxy-C16 bis C₁₈-Ölsäure in den vinylaromatischen Monomeren gelöst zugegeben wird.

5. Verfahren nach einem der Ansprüche 1 bis 4, **dadurch gekennzeichnet, dass** zur Stabilisation der wässrigen Suspension Magnesiumpyrophosphat oder Tricalciumphosphat eingesetzt wird.

6. Verwendung von Tricglyceriden einer Hydroxy-C16 bis C₁₈-Ölsäure als Keimbildner in expandierbaren Styrolpolymerisatpartikeln.

## Claims

1. A process for producing expandable styrene polymer particles via polymerization of vinylaromatic monomers in aqueous suspension in the presence of nucleating agent and of volatile blowing agent, which comprises using, as nucleating agent, from 10 to 5000 ppm, based on vinylaromatic monomers, of a triglyceride of a hydroxy-C₁₆-C₁₈-oleic acid.

2. The process according to claim 1, wherein the triglyceride of a hydroxy-C₁₆-C₁₈-oleic acid has a melting point in the range from 70 to 95°C.

3. The process according to claim 1 or 2, wherein a hydrogenated castor oil (HCO) is used as tricglyceride of a hydroxy-C₁₆-C₁₈-oleic acid.

4. The process according to any of claims 1 to 3, wherein the triglyceride of a hydroxy-C₁₆-C₁₈-oleic acid is added after it has been dissolved in the vinylaromatic monomers.

5. The process according to any of claims 1 to 4, wherein magnesium pyrophosphate or tricalcium phosphate is used to stabilize the aqueous suspension.

6. The use of triglycerides of a hydroxy-C₁₆-C₁₈-oleic acid as nucleating agents in expandable styrene polymer particles.

## Revendications

1. Procédé pour la préparation de particules expansibles de polymère de styrène par polymérisation de monomères aromatiques de vinyle en suspension aqueuse en présence d'agents de formation de germes et d'un agent gonflant volatil, **caractérisé en ce qu'**on utilise, comme agent de formation de germes, 10 à 5000 ppm, par rapport aux monomères aromatiques de vinyle, d'un triglycéride d'un acide hydroxy-C₁₆-C₁₈-oléique.

2. Procédé selon la revendication 1, **caractérisé en ce que** le triglycéride d'un acide hydroxy-C₁₆-C₁₈-oléique présente un point de fusion dans la plage de 70 à 95°C.

3. Procédé selon la revendication 1 ou 2, **caractérisé en ce qu'**on utilise, comme triglycéride d'un acide hydroxy-C₁₆-C₁₈-oléique, une huile de ricin hydrogénée (HCO).

4. Procédé selon l'une quelconque des revendications 1 à 3, **caractérisé en ce que** le triglycéride d'un acide hydroxy-C₁₆-C₁₈-oléique est ajouté sous forme dissoute dans les monomères aromatiques de vinyle.

5. Procédé selon l'une quelconque des revendications 1 à 4, **caractérisé en ce qu'**on utilise, pour la stabilisation de la suspension aqueuse, du pyrophosphate de magnésium ou du phosphate tricalcique.

6. Utilisation de triglycérides d'un acide hydroxy-C₁₆-C₁₈-oléique comme agent de formation de germes dans des particules expansibles de polymère de styrène.
